# EUROPEAN PATENT APPLICATION

(11) **EP 4 803 381 A1**
(43) Date of publication of application: **09.09.2026**
(21) Application number: 25797306.5
(22) Date of filing: 15.04.2025
(51) Int. Cl.: B60R 19/02, B60R 19/42, B60J 5/04

(54) **ANTI-COLLISION ASSEMBLY, VEHICLE DOOR, AND VEHICLE**

(30) Priority: 28.04.2024 CN 202410523400
(71) Applicant: Geely Automobile Research Institute (Ningbo) Co., Ltd., Ningbo, Zhejiang 315336 (CN); Zhejiang Geely Holding Group Co., Ltd., Hangzhou, Zhejiang 310051 (CN)
(72) Inventor: WANG, Dong, Ningbo, Zhejiang 315336 (CN); WANG, Ruizhuo, Ningbo, Zhejiang 315336 (CN); LYU, Tingting, Ningbo, Zhejiang 315336 (CN); WU, Jing, Ningbo, Zhejiang 315336 (CN); WANG, Miao, Ningbo, Zhejiang 315336 (CN); XU, Liwei, Ningbo, Zhejiang 315336 (CN); WANG, Pengxiang, Ningbo, Zhejiang 315336 (CN); ZHOU, Dayong, Ningbo, Zhejiang 315336 (CN)
(74) Representative: Murgitroyd & Company
(86) International application number: PCT/CN2025/089108
(87) International publication number: WO 2025/228131

(57) **Abstract**

An anti-collision assembly, a vehicle door, and a vehicle, relating to the technical field of vehicles. The provided anti-collision assembly is configured to be mounted within a vehicle door having a connection region, and comprises an anti-collision tube (100) and a connection component. The connection component is fixedly arranged on the anti-collision tube (100) and is configured to be connected to the connection region, and the shape of the connection component matches the shape of the connection region. The anti-collision assembly addresses the problem of poor side-impact resistance of a vehicle after removal of the B-pillar.

## Description

This application claims priority to Chinese Patent Application No. CN202410523400.4, filed with the Chinese Patent Office on April 28, 2024 and entitled "ANTI-COLLISION ASSEMBLY, VEHICLE DOOR, AND VEHICLE", the entire contents of which are incorporated herein by reference.

### TECHNICAL FIELD

The present application relates to the field of vehicle technology, and more specifically, to an anti-collision assembly, a vehicle door, and a vehicle.

### BACKGROUND

With the rapid development of the vehicle industry, a user requirement for riding experience has also increased. The comfort and convenience of vehicle have gradually become an important criteria for the user when choosing a vehicle.

A vehicle typically includes a front door and a rear door, with a B-pillar located between the front door and the rear door. The B-pillar, acting as a force-transmitting support structure, may ensure a survival space for an occupant during a side collision. However, the presence of the B-pillar affects the convenience of getting on and off the vehicle, impacting the user's riding experience. The convenience of getting on and off the vehicle may be improved by removing the B-pillar. However, after removing the B-pillar, the side anti-collision performance of the vehicle is poor, posing a safety hazard.

### SUMMARY

The present application provides an anti-collision assembly, a vehicle door, and a vehicle. Various aspects involved in the present application are introduced below.

In a first aspect, an anti-collision assembly is provided, including:
an anti-collision tube; and
a connecting assembly, where the connecting assembly is fixedly provided on the anti-collision tube, the connecting assembly is configured to connect with the connection region, and a shape of the connecting assembly is adapted to a shape of the connection region.

Optionally, the connecting assembly includes a connecting tube, at least a portion of the connecting tube is sleeved on an outer wall of the anti-collision tube and fixedly connected to the anti-collision tube.

Optionally, the connecting tube includes a first half tube and a second half tube, the first half tube and the second half tube are fastened together to form the connecting tube.

Optionally, there are a plurality of the connecting tubes, at least two connecting tubes are respectively provided at two ends of the anti-collision tube, and the two connecting tubes located at the two ends of the anti-collision tube are respectively configured to connect with a frame of the vehicle door; and
each of the connecting tubes located at the two ends of the anti-collision tube includes a first portion and a second portion, the first portion and the second portion are distributed and connected along a length direction of the anti-collision assembly, the first portion covers the anti-collision tube, the second portion protrudes in a direction away from the anti-collision tube, and an end of the second portion away from the first portion is a flat structure.

Optionally, the first half tube and the second half tube are each provided with a folded edge, the folded edge protrudes in a direction away from a tube cavity of the connecting tube, and the folded edges of the first half tube and the second half tube are fixedly connected; and/or
a side of an end of the anti-collision tube is provided with a first cutout, a side of the first portion is provided with a second cutout, the second cutout abuts against the first cutout, regions of the first half tube and the second half tube corresponding to the second portion are each provided with a folded edge, the folded edge protrudes in a direction away from the tube cavity of the connecting tube, and the folded edges of the first half tube and the second half tube are connected.

Optionally, the connecting tube located at the end of the anti-collision tube is provided with an inducing structure.

Optionally, a cross-sectional shape of the anti-collision tube is a polygonal.

Optionally, the anti-collision tube is a hot-expanded tube.

Optionally, the anti-collision tube is provided with a perforation, and the perforation communicates the outer wall and the inner wall of the anti-collision tube; and/or
the anti-collision tube is provided with a first positioning structure, the connecting assembly is provided with a second positioning structure, and the first positioning structure and the second positioning structure are in positioning fit; and/or
the anti-collision tube is provided with a mounting hole, and the mounting hole is configured to connect with the vehicle door.

Optionally, the anti-collision assembly further includes an anti-collision beam, one end of the anti-collision beam is fixedly connected to the anti-collision tube, the other end is configured to connect with the vehicle door, and the anti-collision beam is a concave-convex structure.

Optionally, the anti-collision tube has a closed tube cavity, and the closed tube cavity is configured to be filled with gas.

In a second aspect, a vehicle door is provided, including the anti-collision assembly according to any one of the above, where the anti-collision assembly is arranged in the vehicle door.

In a third aspect, a vehicle is provided, including the vehicle door according to any one of the above, where the vehicle door includes a front door and a rear door, and the anti-collision assembly is arranged in both the front door and the rear door.

Optionally, the anti-collision assembly in the front door is located on a side of the front door close to the rear door, and the anti-collision assembly in the rear door is located on a side of the rear door close to the front door.

The anti-collision assembly provided in the embodiments of the present application is installed in the vehicle door, which can improve the side barrier impact performance and side pole impact performance of the vehicle door. Therefore, when the B-pillar between the front door and the rear door of the vehicle is removed, the side anti-collision performance of the vehicle can still be ensured. Thus, the present application can solve a problem in the prior art that the side anti-collision performance of the vehicle is poor after the B-pillar is removed.

### BRIEF DESCRIPTION OF DRAWINGS

FIG. 1 is a schematic structural diagram of an anti-collision assembly for installation in a front door and a rear door of a vehicle according to an embodiment of the present application;
FIG. 2 is a bottom view of FIG. 1;
FIG. 3 is a front view of FIG. 1;
FIG. 4 is a left side view of FIG. 1;
FIG. 5 is a right side view of FIG. 1;
FIG. 6 is a schematic structural diagram of a first half tube of a connecting tube for installation in a front door and for connecting with an upper frame according to an embodiment of the present application;
FIG. 7 is a front view of FIG. 6;
FIG. 8 is a left side view of FIG. 6;
FIG. 9 is a top view of FIG. 6;
FIG. 10 is a schematic structural diagram of a second half tube of a connecting tube for installation in a front door and for connecting with an upper frame according to an embodiment of the present application;
FIG. 11 is a front view of FIG. 10;
FIG. 12 is a left side view of FIG. 10;
FIG. 13 is a top view of FIG. 10;
FIG. 14 is a schematic structural diagram of a first half tube of a connecting tube for installation in a front door and for connecting with a lower frame according to an embodiment of the present application;
FIG. 15 is a top view of FIG. 14;
FIG. 16 is a left side view of FIG. 14;
FIG. 17 is a front view of FIG. 14;
FIG. 18 is a schematic structural diagram of a second half tube of a connecting tube for installation in a front door and for connecting with a lower frame according to an embodiment of the present application;
FIG. 19 is a front view of FIG. 18;
FIG. 20 is a left side view of FIG. 18;
FIG. 21 is a top view of FIG. 18;
FIG. 22 is a schematic structural diagram of an anti-collision tube for installation in a front door according to an embodiment of the present application;
FIG. 23 is a bottom view of FIG. 22;
FIG. 24 is a front view of FIG. 22;
FIG. 25 is a left side view of FIG. 22;
FIG. 26 is a schematic structural diagram of an anti-collision beam for installation in a front door according to an embodiment of the present application;
FIG. 27 is a top view of FIG. 26;
FIG. 28 is a right side view of FIG. 26;
FIG. 29 is a schematic structural diagram of a first half tube of a connecting tube for installation in a rear door and for connecting with an upper frame according to an embodiment of the present application;
FIG. 30 is a front view of FIG. 29;
FIG. 31 is a left side view of FIG. 29;
FIG. 32 is a top view of FIG. 29;
FIG. 33 is a schematic structural diagram of a second half tube of a connecting tube for installation in a rear door and for connecting with an upper frame according to an embodiment of the present application;
FIG. 34 is a front view of FIG. 33;
FIG. 35 is a left side view of FIG. 33;
FIG. 36 is a top view of FIG. 33;
FIG. 37 is a schematic structural diagram of a first half tube of a connecting tube for installation in a rear door and for connecting with a lower frame according to an embodiment of the present application;
FIG. 38 is a front view of FIG. 37;
FIG. 39 is a left side view of FIG. 37;
FIG. 40 is a top view of FIG. 37;
FIG. 41 is a schematic structural diagram of a second half tube of a connecting tube for installation in a rear door and for connecting with a lower frame according to an embodiment of the present application;
FIG. 42 is a front view of FIG. 41;
FIG. 43 is a left side view of FIG. 41;
FIG. 44 is a top view of FIG. 41;
FIG. 45 is a schematic structural diagram of an anti-collision tube for installation in a rear door according to an embodiment of the present application;
FIG. 46 is a front view of FIG. 45;
FIG. 47 is a left side view of FIG. 45;
FIG. 48 is a top view of FIG. 45;
FIG. 49 is a schematic structural diagram of an anti-collision beam for installation in a rear door according to an embodiment of the present application;
FIG. 50 is a front view of FIG. 49;
FIG. 51 is a left side view of FIG. 49;
FIG. 52 is a top view of FIG. 49.

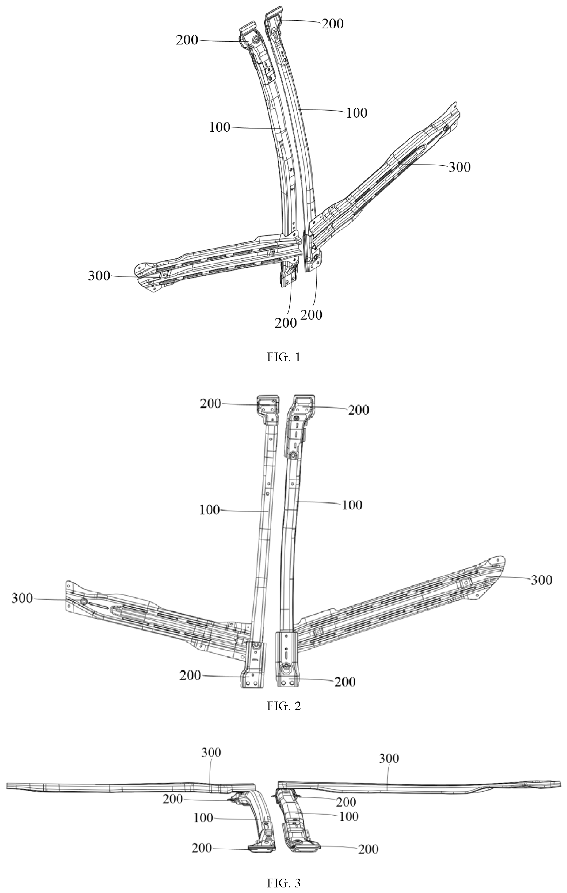

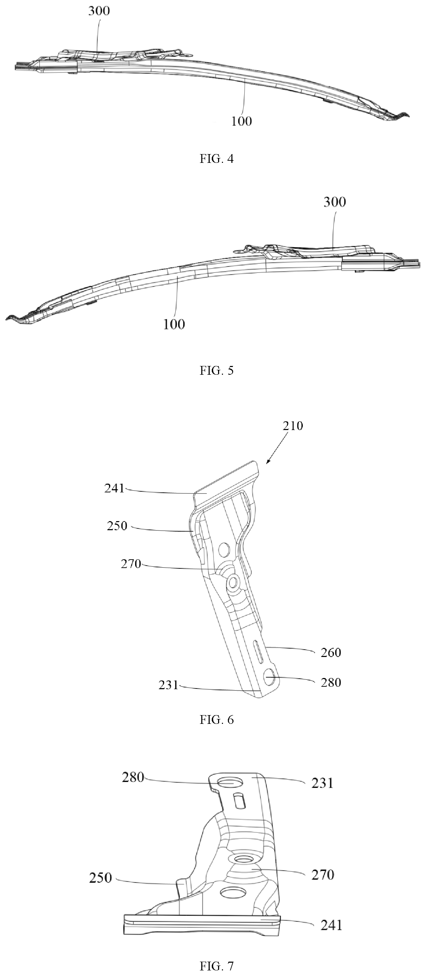

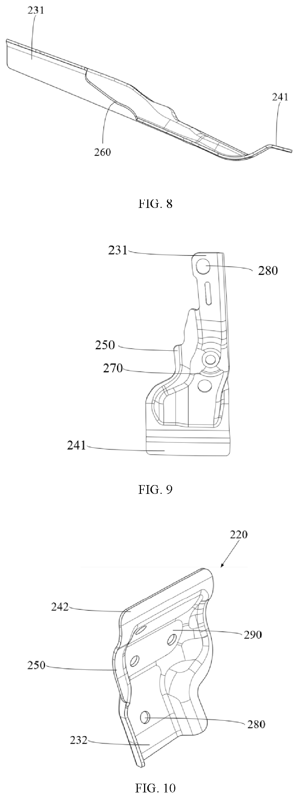

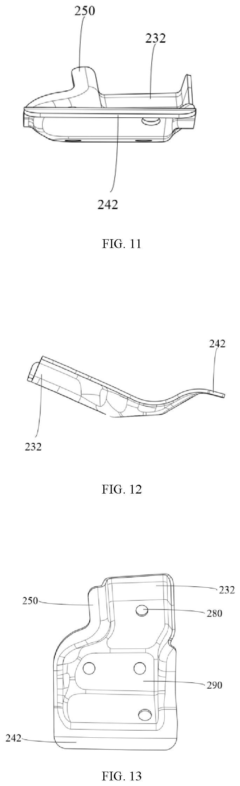

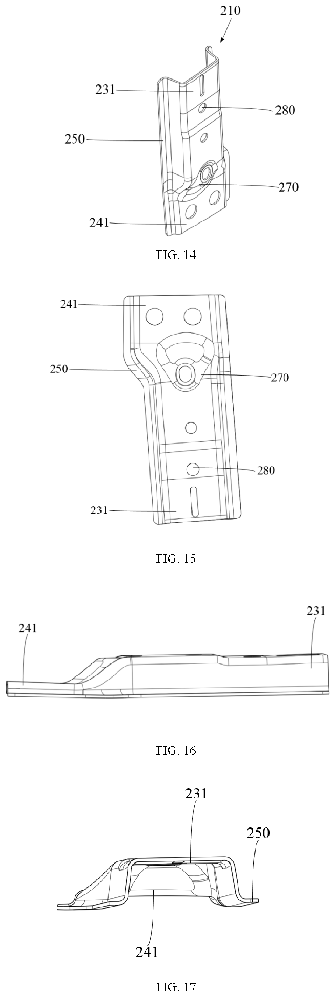

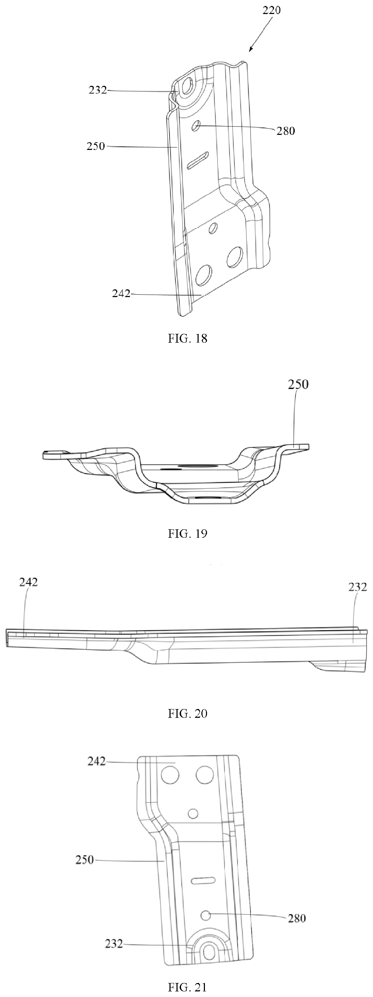

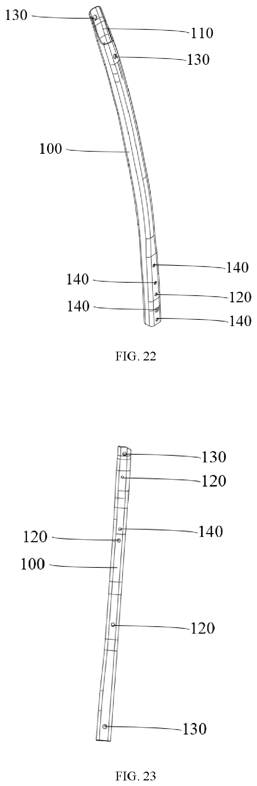

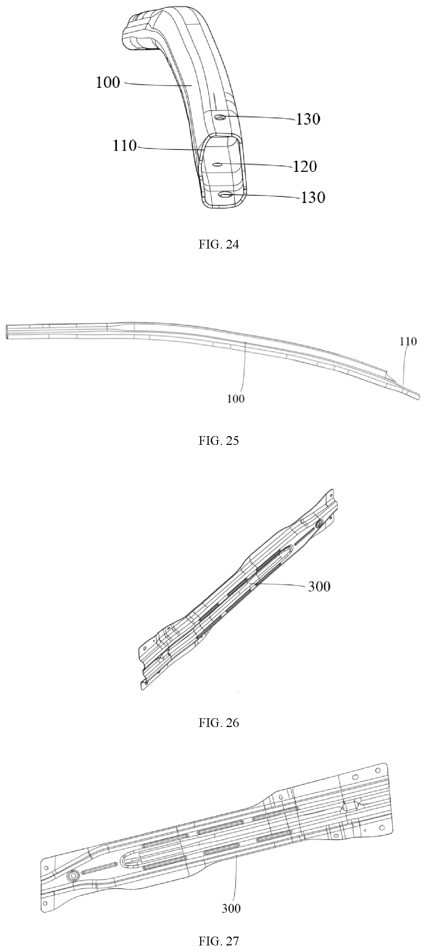

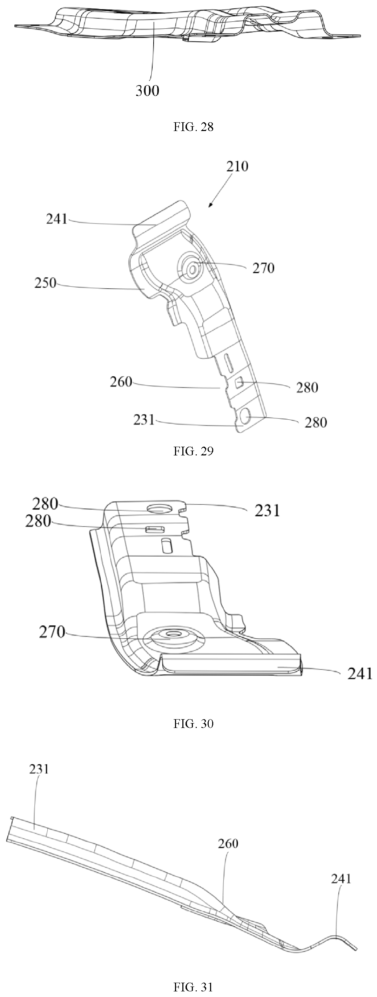

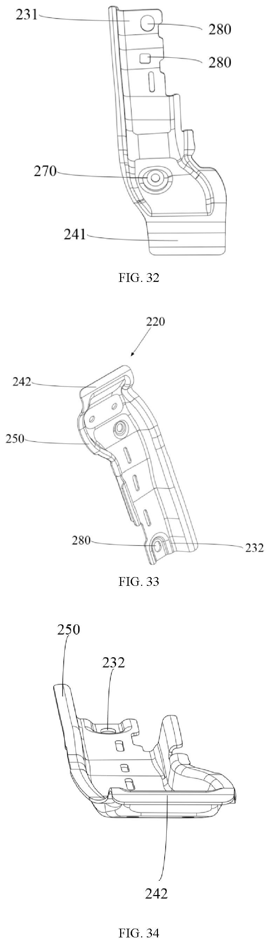

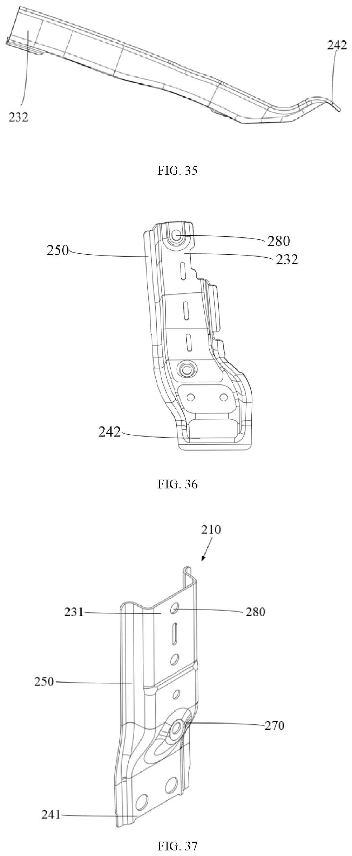

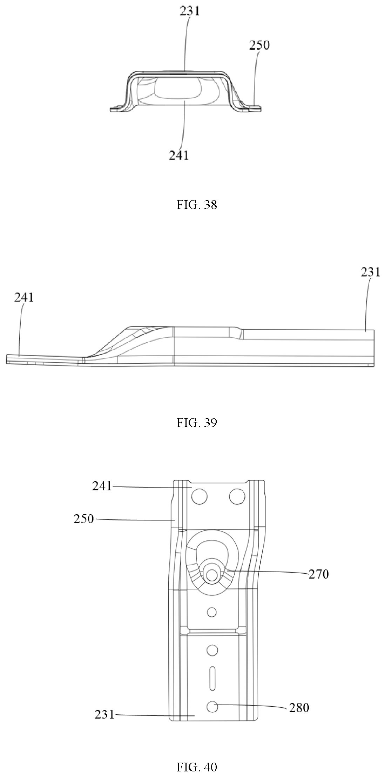

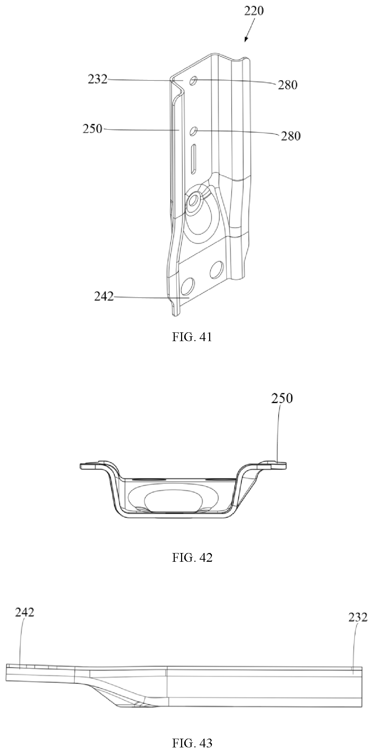

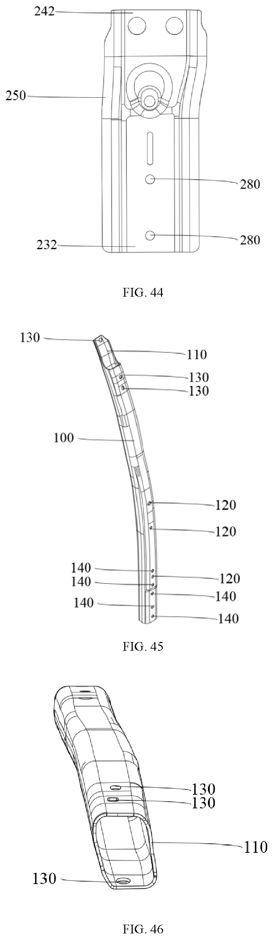

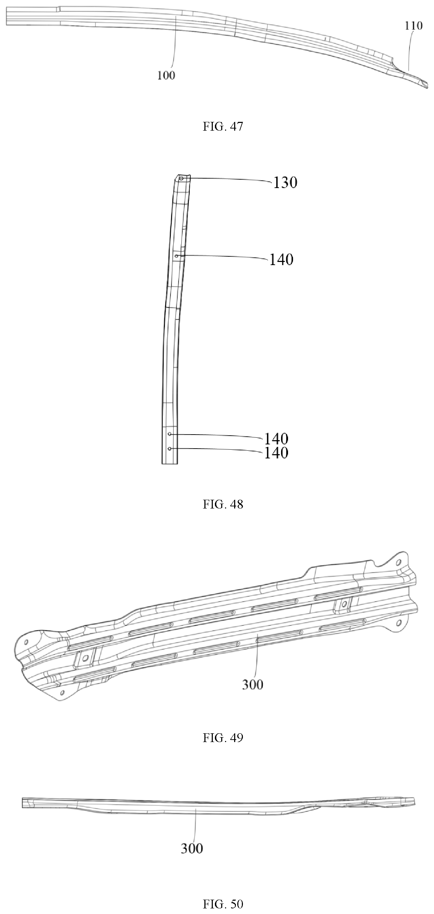

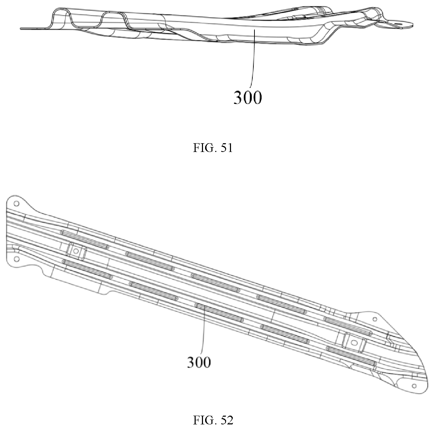

In FIG. 1 to FIG. 52:
100. Anti-collision tube; 110. First cutout; 120. Perforation; 130. First positioning hole; 140. Mounting hole;
200. Connecting tube; 210. First half tube; 220. Second half tube; 231. First portion a1; 232. First portion a2; 241. Second portion a1; 242. Second portion a2; 250. Folded edge; 260. Second cutout; 270. Inducing structure; 280. Second positioning hole; 290. Positioning surface;
300. Anti-collision beam.

### DESCRIPTION OF EMBODIMENTS

Current vehicles typically have a B-pillar between the front door and the rear door. The function of the B-pillar is to transmit force and provide support, offering some protection to occupants in the event of a side collision. However, the presence of the B-pillar may affect the convenience of getting on and off the vehicle and also impact the user's riding experience.

The technical solutions in the embodiments of the present application will be clearly and completely described below with reference to the accompanying drawings in the embodiments of the present application. Apparently, the described embodiments are only some rather than all of the embodiments of the present application. Based on the embodiments in the present application, all other embodiments obtained by a person of ordinary skill in the art without creative efforts fall within the scope of protection of the present application.

As shown in FIG. 1 to FIG. 52, an embodiment of the present application provides an anti-collision assembly, configured to be installed in a vehicle door with a connection region. The provided anti-collision assembly includes an anti-collision tube 100 and a connecting assembly.

Compared with a U-shaped plate structure, a tubular structure may reduce its size. Therefore, using the anti-collision tube 100 compared to using a U-shaped plate may reduce the size of the anti-collision assembly and improve the space utilization rate in the vehicle door. The anti-collision tube 100 may be a hollow tube, which is beneficial for the lightweight design of the anti-collision assembly.

The connecting assembly is fixedly arranged on the anti-collision tube 100. Optionally, the connecting assembly may be fixedly arranged on the anti-collision tube 100 in a manner of welding or bolting. The connecting assembly is configured to connect with the connection region in the vehicle door. Optionally, the connecting assembly may be connected to the connection region in the vehicle door in a manner of bolting, welding, or the like. A shape of the connecting assembly is adapted to a shape of the connection region, so that when the anti-collision assembly is installed in the vehicle door, the connecting assembly and the connection region may fit together more smoothly, which helps to increase a contact area between the connecting assembly and the connection region. After the contact area increases, more fasteners such as bolts can be used to connect the connection component and the connection region, or more welding spots may be provided on the connection component and the connection region, thereby improving the connection strength between the connecting assembly and the connection region, and further improving the connection strength between the anti-collision assembly and the vehicle door, as well as the overall anti-collision performance of the vehicle door after the anti-collision assembly is installed.

Installing the anti-collision assembly in the embodiments of the present application in the vehicle door can improve the side barrier impact performance and side pole impact performance of the vehicle door. Therefore, when the B-pillar between the front door and the rear door of the vehicle is removed, the side anti-collision performance of the vehicle can still be ensured. It can be learned that, the embodiments of the present application can solve the problem in the prior art of poor side anti-collision performance of the vehicle after removing the B-pillar.

The anti-collision tube 100 may be a hot-expanded tube, processed using laser welding and formed by a hot gas expansion molding technology to improve structural strength of the anti-collision tube 100. Optionally, the anti-collision tube 100 may be made of a 1500-2000 Mpa material, for example, a 1500 Mpa material, or a 2000 Mpa material.

The connecting assembly may be a connecting plate or a connecting tube 200. At least a portion of the connecting tube 200 may be sleeved on an outer wall of the anti-collision tube 100 and fixedly connected to the anti-collision tube 100. When the connecting assembly is the connecting tube 200, the connecting tube 200 can fasten a partial region of the anti-collision tube 100 into the connecting tube 200, improving the connection strength between the anti-collision tube 100 and the connecting tube 200, thereby improving the connection strength between the anti-collision tube 100 and the vehicle door.

The connecting tube 200 may include a first half tube 210 and a second half tube 220. The first half tube 210 and the second half tube 220 may be fastened together to form the connecting tube 200. This structure facilitates the connection between the connecting tube 200 and the anti-collision tube 100. Optionally, the first half tube 210 and the second half tube 220 may also be fixedly connected by welding or bolted connection.

Furthermore, a shape of the connecting tube 200 is adapted to a shape of the connection region of the vehicle door. The connecting tube 200 may be installed at any position on the anti-collision tube 100. Therefore, the connection region of the vehicle door may also be at any position on the vehicle door. A shape of the vehicle door is usually irregular, especially the frame of the vehicle door, which is often a curved surface or other irregular shapes. Therefore, to adapt to the shape of the vehicle door, the connecting tube 200 is also an irregular tubular structure. The processing difficulty of an irregular tubular structure is relatively high. In the embodiments of the present application, the connecting tube 200 is divided into the first half tube 210 and the second half tube 220. The first half tube 210 and the second half tube 220 may be processed in a hot stamping manner or the like, thereby reducing the processing difficulty of the connecting tube 200.

A quantity of connecting tubes 200 may be one or more. In a case in which the quantity of the connecting tubes 200 is multiple, at least two connecting tubes 200 may be respectively arranged at two ends of the anti-collision tube 100. Arranging the connecting tube 200 at an end of the anti-collision tube 100 facilitates the connection between the connecting tube 200 and the anti-collision tube 100. The two connecting tubes 200 arranged at the two ends of the anti-collision tube 100 are respectively used for connecting with a frame of the vehicle door (e.g., an upper frame and a lower frame).

Each of the connecting tubes 200 located at both ends of the anti-collision tube 100 may include a first portion and a second portion. The first portion and the second portion may be distributed and connected along a length direction of the anti-collision assembly. The first portion may cover the anti-collision tube 100. The second portion may protrude in a direction away from the anti-collision tube 100, and an end of the second portion away from the first portion is a flat structure.

Each of the connecting tubes 200 installed at both ends of the anti-collision assembly is configured to connect with a frame of the vehicle door. The frame of the vehicle door usually adopts a structure that tapers from the middle towards both ends (i.e., outer edges on both sides). In this way, designing the second portion of the connecting tube 200 as a flat structure can adapt to the shape of the vehicle door frame.

To achieve the connection between the first half tube 210 and the second half tube 220, in an optional embodiment, both the first half tube 210 and the second half tube 220 may be provided with a folded edge 250. The folded edge 250 may protrude in a direction away from the tube cavity of the connecting tube 200. The folded edges 250 of the first half tube 210 and the second half tube 220 may be fixedly connected to achieve the connection between the first half tube 210 and the second half tube 220. Providing the folded edge 250 facilitates the connection between the first half tube 210 and the second half tube 220 and also increases the contact area between the first half tube 210 and the second half tube 220, thereby improving the connection strength between the first half tube 210 and the second half tube 220.

In another optional embodiment, one side of an end of the anti-collision tube 100 may be provided with a first cutout 110. One side of the first portion may be provided with a second cutout 260. The second cutout 260 may abut against the first cutout 110. Regions of the first half tube 210 and the second half tube 220 corresponding to the second portion may each be provided with a folded edge 250, and the folded edge 250 protrudes in a direction away from the tube cavity of the connecting tube 200. The folded edges 250 of the first half tube 210 and the second half tube 220 are connected. Under this structure, the regions of the first half tube 210 and the second half tube 220 corresponding to the second portion are each provided with the folded edge 250. The connection between the first half tube 210 and the second half tube 220 is achieved through the folded edge 250. The region of the first half tube 210 or the second half tube 220 corresponding to the first portion may be provided with a second cutout 260. The second cutout 260 abuts against the first cutout 110, which can reduce the volume of the region of the anti-collision assembly corresponding to the first portion to adapt to small space in the vehicle door.

For example, the vehicle door has a window frame. An edge of the window frame is adjacent to the frame of the vehicle door. A shape of the connecting tube 200 connected to the frame may also be limited by a shape of the window frame. The window frame usually includes four or more sides, and corners are formed between adjacent sides. The corners of the window frame are usually chamfered arc structures. Therefore, space between a corner of the window frame and an edge of the vehicle door is relatively large, while the space between a side of the window frame and an edge of the vehicle door is relatively small. The second portion of the connecting tube 200 may be located in a region between a corner of the window frame and an edge of the vehicle door. This region has a relatively large space, so the second portion of the connecting tube 200 may have the folded edge 250 to ensure the connection between the first half tube 210 and the second half tube 220. The first portion of the connecting tube 200 may be located in the region between the side of the window frame and the edge of the vehicle door. Therefore, reducing the volume of the anti-collision assembly in the region where the first portion is located through the first cutout 110 and the second cutout 260 can adapt to the small space between the side of the window frame and the edge of the vehicle door.

The vehicle door includes a front door and a rear door. The anti-collision assembly may be installed in both the front door and the rear door, and a length direction of the anti-collision assembly may be distributed along a height direction of the vehicle door.

For the anti-collision assembly used for installation in the front door, along the length direction, the connecting tube 200 located at an upper end of the anti-collision tube 100 is configured to connect with an upper frame of the front door. The region of its first half tube 210 corresponding to the first portion, such as the first portion a1 (231) in the figure, may be provided with the second cutout 260, abutting against the first cutout 110 on the anti-collision tube 100. Then, the region of its second half tube 220 corresponding to the first portion, such as the first portion a2 (232) in the figure, may not be provided with the folded edge 250. Alternatively, the length of the second half tube 220 may be less than the length of the first half tube 210, and the first portion of the second half tube 220 avoids the region of the first half tube 210 where the second cutout 260 is provided, so that the volume of the region of the anti-collision assembly corresponding to the first portion, specifically the region of the first portion a1 (231) in the figure, is reduced. The region of its first half tube 210 corresponding to the second portion, such as the second portion a1 (241) in the figure, and the region of the second half tube 220 corresponding to the second portion, such as the second portion a2 (242) in the figure, may be provided with the folded edge 250, and the connection between the first half tube 210 and the second half tube 220 is achieved through the folded edge 250.

For the anti-collision assembly used for installation in the front door, along the length direction, the connecting tube 200 located at a lower end of the anti-collision tube 100 is configured to connect with a lower frame of the front door. Both its first portion and second portion may be provided with the folded edge 250, and the connection between the first half tube 210 and the second half tube 220 is achieved through the folded edge 250.

A structure of the connecting tube 200 at the two ends of the anti-collision assembly used for installation in the rear door may be the same as a structure of the connecting tube 200 at the two ends of the anti-collision assembly used for installation in the front door. That is, for the anti-collision assembly used for installation in the rear door, the connecting tube 200 used for connecting with the upper frame of the rear door is provided with both the second cutout 260 and the folded edge 250. For the anti-collision assembly used for installation in the rear door, the connecting tube 200 used for connecting with the lower frame of the rear door may be provided with the folded edge 250, which will not be described in detail herein.

Certainly, in other embodiments, any one of the connecting tube 200 installed in the front door and used for connecting with the upper frame of the front door, the connecting tube 200 installed in the front door and used for connecting with the lower frame of the front door, the connecting tube 200 installed in the rear door and used for connecting with the upper frame of the rear door, and the connecting tube 200 installed in the rear door and used for connecting with the lower frame of the rear door may be a structure provided with both the second cutout 260 and the folded edge 250, or a structure provided with only the folded edge 250, and its specific structure is selected according to the specific structure of the vehicle door.

Further, the vehicle door may include an inner panel and an outer panel. The second half tube 220 of the connecting tube 200 may be fixed to the inner panel of the vehicle door by means such as bolted connection or welding, and the first half tube 210 of the connecting tube 200 may be opposite to the outer panel of the vehicle door. Certainly, in other embodiments, the first half tube 210 of the connecting tube 200 may also be fixed to the outer panel of the vehicle door by means such as bolted connection or welding, and the second half tube 220 of the connecting tube 200 may be opposite to the inner panel of the vehicle door.

The first half tube 210 and/or the second half tube 220 of the connecting tube 200 may also be provided with a positioning surface 290, and the positioning surface 290 is used for positioning fit with a connection region of the vehicle door.

In the embodiments of the present application, the connecting tube 200 located at the end of the anti-collision tube 100 may be provided with an inducing structure 270, which may deform and absorb energy during a collision, inducing the anti-collision assembly to deform at the position of the inducing structure 270. When the anti-collision assembly is impacted, the inducing structure 270 can induce the anti-collision assembly to deform at the position of the inducing structure 270. The inducing structure 270 is provided on the connecting tube 200 at the end of the anti-collision tube 100. The end of the anti-collision tube 100 is correspondingly connected to the upper and lower sides of the vehicle door (the upper frame and the lower frame of the vehicle door). The upper and lower sides of the vehicle door may avoid the positions of vehicle occupants, thereby protecting the occupants.

Optionally, the inducing structure 270 may adopt a wave-shaped structure, or certainly, may be another shape structure, which is not limited herein.

A cross-sectional shape of the anti-collision tube 100 is a polygon. For example, the cross-sectional shape of the anti-collision tube 100 used for installation in the front door may be a trapezoid, with the short side facing outward (outside the vehicle) and the long side facing inward (inside the vehicle). The cross-section of the anti-collision tube 100 used for installation in the rear door may be a square or an approximately square design. By designing the cross-section of the anti-collision tube 100 as a polygon, the bending resistance of the anti-collision tube 100 is improved, preventing deformation during a collision. It should be noted that the cross-section of the anti-collision tube 100 refers to a cross-section perpendicular to the length direction of the anti-collision tube 100.

The anti-collision tube 100 may be provided with a perforation 120. The perforation 120 communicates an outer wall and an inner wall of the anti-collision tube 100. The perforation 120 is used for allowing anti-corrosion liquid to enter the interior of the anti-collision tube 100 during anti-corrosion treatment of the anti-collision tube 100, so as to better form an anti-corrosion layer in the anti-collision tube 100.

The anti-collision tube 100 may be provided with a first positioning structure, such as a first positioning hole 130. The connecting assembly may be provided with a second positioning structure, such as a second positioning hole 280 (the second positioning hole 280 may be provided on the first half tube 210 and/or the second half tube 220). The first positioning structure and the second positioning structure are in positioning fit. For example, the positioning fit of the first positioning hole 130 and the second positioning hole 280 is achieved through a positioning pin. One of the first positioning structure and the second positioning structure may be a positioning protrusion, and the other may be a positioning hole or a positioning slot. The positioning protrusion extends into the positioning hole or the positioning slot to achieve the positioning fit of the two. In this case, through the positioning fit of the first positioning structure and the second positioning structure, it is more convenient to achieve the positioning connection of the connecting tube 200 and the anti-collision tube 100.

Furthermore, the first positioning hole 130 may also be used for allowing anti-corrosion liquid to enter the interior of the anti-collision tube 100 during anti-corrosion treatment of the anti-collision tube 100, so as to better form an anti-corrosion layer in the anti-collision tube 100.

The anti-collision tube 100 may also be provided with a mounting hole 140. The mounting hole 140 is used for connecting with the vehicle door through a fastener such as a bolt.

Optionally, the perforation 120, the first positioning hole 130, the second positioning hole 280, and the mounting hole 140 may all be formed by laser drilling. Of course, they may also be formed by drilling, which is not limited herein.

To further improve the anti-collision performance of the anti-collision assembly, the anti-collision assembly may also include an anti-collision beam 300. Along a length direction of the anti-collision beam 300, one end of the anti-collision beam 300 may be fixedly connected to the anti-collision tube 100 by means such as bolted connection or welding, and the other end is used for connecting with the vehicle door by means such as bolted connection or welding. To improve the structural strength of the anti-collision beam 300, the anti-collision beam 300 may be a concave-convex structure. For example, the cross-sectional shape of the anti-collision beam 300 may be W-shaped or M-shaped. In this case, the bending resistance during a collision can be increased. Furthermore, for the anti-collision beam 300 with a W-shaped or M-shaped cross-section, flanged edges are formed on both sides of its cross-section, which can increase the contact area of the anti-collision tube 100 and the vehicle door, facilitating load transfer. It should be noted that the cross-section of the anti-collision beam 300 refers to a cross-section perpendicular to the length direction of the anti-collision beam 300.

To further improve the anti-collision performance of the anti-collision tube 100, and thereby further improve the anti-collision performance of the anti-collision assembly, the anti-collision tube 100 may have a closed tube cavity, and the closed tube cavity is used for filling with gas. When the closed tube cavity of the anti-collision tube 100 is filled with gas, especially highpressure gas, the strength of the anti-collision tube 100 can be increased, thereby improving the anti-collision performance.

Based on the above anti-collision assembly, an embodiment of the present application also provides a vehicle door. The vehicle door includes the above anti-collision assembly, and the anti-collision assembly is arranged in the vehicle door. Since the vehicle door has the above anti-collision assembly, the beneficial effects brought by the anti-collision assembly to the vehicle door can be referred to the above content, and will not be repeated here.

Based on the above vehicle door, an embodiment of the present application also provides a vehicle. The vehicle includes the above vehicle door. The vehicle door includes a front door and a rear door. An anti-collision assembly is provided in both the front door and the rear door. Since the vehicle has the above vehicle door, the beneficial effects brought by the vehicle door to the vehicle can be referred to the above content, and will not be repeated here.

In a further technical solution, the anti-collision assembly in the front door may be located on a side of the front door close to the rear door, and the anti-collision assembly in the rear door may be located on a side of the rear door close to the front door.

The basic principles of the present application have been described above in conjunction with specific embodiments. However, it should be pointed out that the advantages, benefits, effects, etc. mentioned in the embodiments of the present application are merely examples and are not limiting, and it should not be considered that these advantages, benefits, effects, etc. are necessary for each embodiment of the present application. In addition, the specific details disclosed above are only for the purpose of illustration and ease of understanding, and are not limiting. The above details do not limit the present application to being implemented by necessarily adopting the above specific details.

A block diagram of a device, apparatus, device, and system involved in this application is merely an example, and is not intended to require or imply that a connection, arrangement, and configuration must be performed in a manner shown in the block diagram. As will be recognized by a person skilled in the art, these components, apparatuses, devices, and systems may be connected, arranged, and configured in any manner. Words such as "include", "include", "have" are open words, and may be used interchangeably with "include but not be limited to". The terms "or" and "used herein refer to the words" and/or "and may be used interchangeably with them unless the context expressly indicates otherwise. The term "such as" used herein refers to the phrase "such as but not limited to" and may be used interchangeably therewith.

It should be further noted that in the apparatus, device, and method of this application, components or steps may be decomposed and/or recombined. These decomposition and/or recombination shall be considered equivalent solutions of this application.

The foregoing descriptions of the disclosed aspects are provided to enable any person skilled in the art to make or use this application. Various modifications to these aspects are very obvious to a person skilled in the art, and a general principle defined herein may be applied to other aspects without departing from the scope of this application. Therefore, this application is not intended to be limited to the aspects shown herein, but to the widest extent consistent with the principles and novel features disclosed herein.

It should be understood that the limiting words "first", "second", "third", "fourth", "fifth", and "sixth" used in the description of the embodiments of this application are merely used to describe the technical solutions more clearly, and cannot be used to limit the protection scope of this application.

The foregoing description has been presented for the purposes of illustration and description. Furthermore, this description is not intended to limit the embodiments of the present application to the forms disclosed herein. Although multiple example aspects and embodiments have been discussed above, those skilled in the art will recognize certain variations, modifications, changes, additions, and sub-combinations thereof.

The foregoing descriptions are merely specific implementation manners of the present application, but are not intended to limit the protection scope of the present application. Any change or replacement readily figured out by a person skilled in the art within the technical scope disclosed in the present application shall fall within the protection scope of the present application. Therefore, the protection scope of this application shall be subject to the protection scope of the claims.

## Claims

1. An anti-collision assembly, configured to be installed in a vehicle door with a connection region, wherein the anti-collision assembly comprises:
an anti-collision tube (100); and
a connecting assembly, wherein the connecting assembly is fixedly provided on the anti-collision tube (100), the connecting assembly is configured to connect with the connection region, and a shape of the connecting assembly is adapted to a shape of the connection region.

2. The anti-collision assembly according to claim 1, wherein the connecting assembly comprises a connecting tube (200), at least a portion of the connecting tube (200) is sleeved on an outer wall of the anti-collision tube (100) and fixedly connected to the anti-collision tube (100).

3. The anti-collision assembly according to claim 2, wherein the connecting tube (200) comprises a first half tube (210) and a second half tube (220), the first half tube (210) and the second half tube (220) are fastened together to form the connecting tube (200).

4. The anti-collision assembly according to claim 3, wherein there are a plurality of the connecting tubes (200), at least two of the connecting tubes (200) are respectively provided at two ends of the anti-collision tube (100), and the two connecting tubes (200) located at the two ends of the anti-collision tube (100) are respectively configured to connect with a frame of the vehicle door; and
each of the connecting tubes (200) located at the two ends of the anti-collision tube (100) comprises a first portion and a second portion, the first portion and the second portion are distributed and connected along a length direction of the anti-collision assembly, the first portion covers the anti-collision tube (100), the second portion protrudes in a direction away from the anti-collision tube (100), and an end of the second portion away from the first portion is a flat structure.

5. The anti-collision assembly according to claim 4, wherein the first half tube (210) and the second half tube (220) are each provided with a folded edge (250), the folded edge (250) protrudes in a direction away from a tube cavity of the connecting tube (200), and the folded edges (250) of the first half tube (210) and the second half tube (220) are fixedly connected; and/or
a side of an end of the anti-collision tube (100) is provided with a first cutout (110), a side of the first portion is provided with a second cutout (260), the second cutout (260) abuts against the first cutout (110), regions of the first half tube (210) and the second half tube (220) corresponding to the second portion are each provided with a folded edge (250), the folded edge (250) protrudes in a direction away from the tube cavity of the connecting tube (200), and the folded edges (250) of the first half tube (210) and the second half tube (220) are connected.

6. The anti-collision assembly according to claim 4, wherein the connecting tube (200) located at the end of the anti-collision tube (100) is provided with an inducing structure (270).

7. The anti-collision assembly according to any one of claims 1 to 6, wherein a cross-sectional shape of the anti-collision tube (100) is a polygon.

8. The anti-collision assembly according to any one of claims 1 to 7, wherein the anti-collision tube (100) is a hot-expanded tube.

9. The anti-collision assembly according to any one of claims 1 to 8, wherein the anti-collision tube (100) is provided with a perforation (120), and the perforation (120) communicates an outer wall and an inner wall of the anti-collision tube (100); and/or
the anti-collision tube (100) is provided with a first positioning structure, the connecting assembly is provided with a second positioning structure, and the first positioning structure and the second positioning structure are in positioning fit; and/or
the anti-collision tube (100) is provided with a mounting hole (140), and the mounting hole (140) is configured to connect with the vehicle door.

10. The anti-collision assembly according to any one of claims 1 to 9, wherein the anti-collision assembly further comprises an anti-collision beam (300), one end of the anti-collision beam (300) is fixedly connected to the anti-collision tube (100), the other end is configured to connect with the vehicle door, and the anti-collision beam (300) is a concave-convex structure.

11. The anti-collision assembly according to any one of claims 1 to 10, wherein the anti-collision tube (100) has a closed tube cavity, and the closed tube cavity is configured to be filled with gas.

12. A vehicle door, comprising the anti-collision assembly according to any one of claims 1 to 11, wherein the anti-collision assembly is arranged in the vehicle door.

13. A vehicle, comprising the vehicle door according to claim 12, wherein the vehicle door comprises a front door and a rear door, and the anti-collision assembly is arranged in both the front door and the rear door.

14. The vehicle according to claim 13, wherein the anti-collision assembly in the front door is located on a side of the front door close to the rear door, and the anti-collision assembly in the rear door is located on a side of the rear door close to the front door.
